# EUROPEAN PATENT SPECIFICATION

(11) **EP 3 705 913 B1**
(45) Date of publication and mention of the grant of the patent: **13.12.2023**
(21) Application number: 19161075.7
(22) Date of filing: 06.03.2019
(51) Int. Cl.: G01S 17/89, G01S 17/10, G01S 17/87, G01S 7/481, G01S 7/483, G01S 7/4861, G01S 7/487, G01S 17/18, G01S 17/931

(54) **LIDAR IMAGING APPARATUS FOR A MOTOR VEHICLE**
LIDAR-BILDGEBUNGSVORRICHTUNG FÜR EIN KRAFTFAHRZEUG
APPAREIL D'IMAGERIE LIDAR POUR VÉHICULE À MOTEUR

(43) Date of publication of application: 09.09.2020
(73) Proprietor: Veoneer Sweden AB, 447 83 Vårgårda (SE); Beamagine S.L., 08755 Castellbisbal (ES)
(72) Inventor: KÄLLHAMMER, Jan-Erik, 58246 Linköping (SE); RIU, Jordi, 08660 Balsareny (ES); RODRIGO, Noel, 25005 Lleida (ES); PENA, Sara, 08222 Terrassa (DE)
(74) Representative: Müller Verweyen

(56) References cited:
- EP-A1- 3 428 677
- WO-A1-2018/172767
- US-A1- 2018 284 285
- US-B1- 6 714 286
- DUARTE M F ET AL: "Single-Pixel Imaging via Compressive Sampling", IEEE SIGNAL PROCESSING MAGAZINE, IEEE SERVICE CENTER, PISCATAWAY, NJ, US, vol. 25, no. 2, 1 March 2008 (2008-03-01), pages 83-91, XP011225667, ISSN: 1053-5888, DOI: 10.1109/MSP.2007.914730

## Description

The invention relates to a lidar imaging apparatus for a motor vehicle, comprising an emitting section adapted to emit a pulsed light beam and to change the direction of the light beam in two dimensions perpendicularly to the light beam, and a receiving section having a lens objective, a digital micromirror device DMD comprising a matrix of mirrors, a lidar detector and a further photo detector, and an electronic processing unit, where each mirror of the DMD is controllable to change at least between a first position where light entering the imaging apparatus through said lens objective is directed on said lidar detector, and a second position where light entering the imaging apparatus through said lens objective is directed on said further photo detector, wherein said electronic processing unit is adapted to determine the time-of-flight of a laser pulse from said emitting section to said lidar detector.

Such a lidar imaging apparatus is known from EP 3 428 677 A1.

US 2018/0284285 A1 discloses a multiple sensor lidar system for a vehicle.

M. F. Duarte et al., "Single-Pixel Imaging via compressive sampling", IEEE Signal Proc. Magazine vol. 83, March 2008, p. 83-91, discloses a single-pixel imaging method via compressive sampling.

WO 2018/172767 A1 and US 6,714,286 B1 discloses imaging apparatuses performing autocorrelation processing on the lidar signal to obtain range (or time delay) between a point on the target and a respective pixel.

Current lidar imaging systems for motor vehicles operate in the near infrared range around 1 *µ*m. Here, there is a constant problem with the signal-to-noise ratio, for example due to strong solar background. For longer wavelengths, the signal-to-noise ratio is not expected to be a large problem. Also, using systems working at longer wavelengths would be highly desirable because this would enable larger power in the laser pulses, and thus a larger range within eye safety limits (generally, operating at longer wavelengths is better for eye-safety of road users outside the motor vehicle). However, when moving to longer wavelengths, Silicon is no longer suitable as photosensitive detector material. Photodiode arrays used as image detectors become very expensive, and long wavelength technology is currently limited to very small detector sizes. A small detector size strongly complicates the optical design, especially when significant Field-Of-Views (FOVs) are involved.

Detector technology is limited in the long Infrared range above 1100 nm, in particular at wavelengths around 1550 nm. Only PIN (no gain), APD (linear mode) and SPAD (Geiger mode) detectors are available. Small area APDs are available, but larger detector areas are required because of trade-off with detector area and achievable range. However, large area in InGaAs as photosensitive material is not available being too noisy; MPPC-like arrays are currently not available in InGaAs at all (compared to Silicon photomultipliers SiPM available at shorter wavelengths); only single photon Avalanche Diode SPAD arrays start to be available in InGaAs. Accordingly, areas of small SPADs could be used as detectors for the returning pulse.

APD (and eventually PIN) detectors could be usable, but stable gain is difficult to achieve at longer wavelengths due to the photosensitive material. As regards APD arrays, when moving to larger areas more noise appears, usually due to defects in the photosensitive material. This would mean detectors in an array may have quite different performance, in particular different gain, which would bring on different responses to incoming light, so signal processing would be complicated. SPAD arrays, on the other hand, are very sensitive, but present a large rate of false alarms.

The problem underlying the present invention is to provide a cost-effective lidar imaging apparatus with improved signal-to-noise ratio and longer range within usual eye safety limits.

The invention solves this problem with the features of the independent claims.

According to an advantageous aspect of the invention, the electronic processing unit is adapted to perform compressive sensing processing on the signal provided by the further photo detector or further light sensitive detector.

The invention utilizes a first imaging path, corresponding to a first position of the DMD mirrors, to generate the lidar time-of-flight image, while a second imaging path, corresponding to a second position of the DMD mirrors, is used to generate a further image with higher resolution than the resolution of the further detector, which is achieved by using a processing technique called compressive sensing. The achievement goes at the expense of an acceptable reduction in the system frame rate. For short, the invention uses compressive sensing in the imaging second path to get further images with higher resolution than the further detector could provide without compressive sensing.

Advantageously, therefore, a small and thus inexpensive further detector can be used, instead of a high resolution but expensive photodiode array, for example. Inexpensive small area detectors such as Avalanche Photo Diodes are available, reducing cost significantly. In a very preferred embodiment, a single pixel detector can be used as the further detector. This is particularly useful at wavelengths where Silicon is unsuitable as photosensitive material for the further detector. Therefore, in a preferred embodiment of the invention, the further photo detector is a single pixel detector.

The invention thus contributes to cost reduction by reducing the resolution of the further imaging detector (in combination with the lidar imaging). The further imaging detector may be substituted by a low resolution detector or array, and even a single pixel detector, the intensity measurements of which are afterwards used in a numerical reconstruction of the further image. A single unit can provide congruent lidar and compressed sensing images.

Generally, compression sensing exploits prior knowledge of sparse signals to significantly reduce the number of measurements required to acquire a signal that fits the assumed model. This is done at the expense of increased computations and/or decreased frame rate. In the present application, the invention allows signal reconstruction of the scene in the vehicle environment with only a fraction of the data points as compared to what would be needed with conventional imaging methods. Depth maps may be estimated from planar images at different depths, in particular using triangulation, parallax, neural networks, or other suited methods. A naturalistic road scene often is approximately piecewise planar, so the Laplaci-an of the depth map is approximately sparse. The depth map of a scene is therefore generally more compressible or sparse than the reflectance or texture of the scene.

Preferably, the electronic processing unit is adapted to fuse image data provided by the lidar detector and the further photo detector to a fused image. In this manner, the invention provides a congruent combination of lidar and compressive sensing. The invention advantageously allows combining lidar imaging with a compressed sensing further imaging, and thus a combined imaging method fully congruent with lidar. This is particularly useful under normal weather or light conditions in the vehicle environment. I.e., when no light scattering is present in the lidar images, compression sensing can advantageously serve as a cheaper approach to get an intensity image which complements the lidar image and is fully congruent with it.

In scattering light conditions, the compressive sensing imaging can preferably backup the lidar imaging by estimating images at different depths and thus recovering a depth map, which being sparse will benefit from compressive sensing.

Advantageously, combined processing in the further imaging may also be used to enhance the lidar image. In other words, the electronic processing unit is preferably adapted to perform compressive sensing processing also on the signal provided by the lidar detector. Using compressive sensing on the congruent images consisting of lidar from the first imaging path, following the laser spot, and preferably also in the second imaging path is enabled by using a DMD, or another suited spatial light modulator (SLM), needed for compressive sensing by adding complex patterns (i.e., not only tracking the position of the laser spot) to the further image intensity.

In compressive sensing, a spatial light modulator SLM creates complex patterns of a scene imaged onto it which are successively projected onto a lower resolution, e.g. single pixel, detector. The further detector can be of many kinds, such as a photodiodes, or low resolution CMOS/CCD/InGaAs arrays. A common SLM is a Digital Micromirror Device DMD. Limited but sufficient quality images are obtained after numerical reconstruction of the intensity measurements obtained. However, this makes imaging in the second imaging path possible without the need of an array with a large number of elements.

Additional computing power is needed for performing the image reconstruction in compressive sensing processing from the further intensity measurement in real time during driving. Therefore, a dedicated hardware processing device may preferably be provided for performing the inventive compressive sensing processing. A microcontroller, digital signal processor DSP or an ASIC or FPGA device may be specifically dedicated for processing of the signal to reconstruct the images in said compressive sensing processing. The functionality of a dedicated hardware device could also be provided as a component of a system-on-chip SoC device.

The reconstructed image with enhanced resolution generated using compressive imaging is fully congruent with the simultaneously acquired time-of-flight lidar data. As described above, an aspect of the invention uses compressive sensing in the second imaging path, but compressive sensing may also be used to enhance the lidar image. Advantageous is the application of compressive sensing on the combined self-registered (i.e., congruent) lidar imaging and further imaging obtained using a separate further imaging path in the image acquisition system.

Setups in the first and second imaging paths can be almost equivalent (common DMD, one or more optical elements and a single pixel photodetector) at each side, but in one path time-of-flight imaging is done following the laser spot (Lidar image after full scan), while in the second path a series of intensity values are registered to obtain a 2D intensity image, like color image, greyscale image etc. According to the invention, two imaging paths are used simultaneously. An active illuminator can preferably be used to enhance the scene for the further image (second imaging path). This illuminator would advantageously include the wavelength of the further imaging (non-Lidar) detector. The illuminator may be continuous wave CW or pulsed for gated imaging.

After all, compressive sensing in the further imaging is used together with a lidar image, utilizing a single DMD. This means that two directions of deflection of the light are used, one for obtaining the time-of-flight image (Lidar) and the other for obtaining a resolution enhanced further image using compressive sensing techniques. The invention adds compressive sensing in the non-lidar imaging path, combined with the lidar image path in congruent fashion in one device. The lidar path is where the laser illumination returned signal is acquired. The lidar image may be incoherent or coherent time-of-flight 3D sensing, preferably resolution enhanced by compressive sensing also.

The congruent combination of Lidar images and further reconstructed images using compressive sensing allows detecting through obscurants in the atmosphere, such as inclement weather with rain, fog, smog, smoke, snow, that will disturb the lidar measurements, which in turn can focus on image enhancement of the disturbed image.

The lidar detector preferably comprises one or more diode or diode array from the group of photodiode(s) PD, Avalanche Photo Diode(s) APD; Single Photon Avalanche Diode(s) SPAD; Positive-Intrinsic-Negative PIN diode(s); Multi Pixel Photon Counter MPPC diode(s), solid-state photomultiplier, photomultiplier tube, or balanced detectors in pairs and position sensitive detectors (PSD). In particular, balanced detectors, paired detectors for differential detection, and detector arrays are of preferred practical relevance.

Generally, adverse weather conditions such as rain, fog, smog, sand and snow can obscure the scene and hence reduce the detection range of the lidar imaging. To take account of this, the electronic processing unit is preferably adapted to determine a condition where said lidar imaging is not fully operative (for example due to fog, sand etc.), and to use images from said further photo detector at different depths to estimate a depth map. Shortly speaking, the further images can be used to recover the depth map in case the lidar path has difficulties determining a reliable depth map. Thus, under adverse weather conditions, compressive sensing can be used as a backup or support system for the lidar imaging path, advantageously being integrated in a single imaging unit.

Also preferably, the imaging apparatus can comprise one or more additional illumination sources, preferably operating at a different wavelength than that of the laser, and preferably adapted to illuminate the scene viewed by the imaging apparatus. The additional illumination source may be coherent, incoherent, continuous wave, frequency modulated or pulsed. With the additional illumination source, a reduced impact of light scattered in the environment can be achieved, providing improved resolution or better image quality as compared to regular imaging without additional illumination source.

According to a further aspect of the invention, the imaging approach in the further imaging path might be active, that is, pulsed light may be emitted, and advantageously range gating is performed with respect to the further photo detector. This enables a new useful feature of the invention as repeated pulses can be sampled at different conditions; for instance, different focus of the emitting beam, or different time gates, or different pulse lengths may be used repeatedly to gather more information depending on the environmental conditions. An interesting option is to modify features of the imaging apparatus to achieve information from different depth slices of the scene, thus enabling the creation of alternative depth maps when the conditions are unfavorable for the lidar imaging. The variability of such parameters (or of some others in the emission/detection scheme) would enable a better mapping of the environment and further optimally complement the lidar imaging in light scattering conditions, e.g. fog, smoke, smog, etc. After all, the electronic processing unit is preferably adapted to perform range gating with respect to the further photo detector, further preferably using a variable focus/time gate/pulse length of the illumination for improved detection in scattering conditions, thus calculating depth maps when the lidar imaging is unable.

Another advantageous feature is the ability to dynamically adopt the balance between the different (congruent) images. This can for example be done by interspersing a lidar image from the lidar imaging path without any gating to suppress obscurants at distances outside of the target location as a measure of overall scattering. This measure can then be used to control the various sensing modes in the unit, such as emphasis between lidar imaging and further imaging (possibly with compressive sensing processing), slice length and position in gated imaging, etc. That will allow a dynamic (real-time) adaptivity to current ambient conditions such as amount of obscurants in the imaging path.

According to the invention, the lidar detector is a multi-pixel detector and the electronic processing unit is adapted to perform autocorrelation processing on the signal provided by the lidar detector.

This aspect of the invention has realized that "real alarms", i.e. detected events not caused by noise but by true signals from reflected laser light, are triggering simultaneously by more than one photodiode nearby, because lidar imaging does not really work in single photon mode but in larger spots. In a photodiode array, autocorrelation would deliver large peaks on the large "true signal" spot, and much smaller in the "noise-related" spots, thus enabling to differentiate real alarms from false ones. In short, this aspect of the invention allows to filter out false alarms in lidar photodiode arrays using autocorrelation processing of the lidar signal.

Autocorrelation is a fast numerical operation, easy and very fast to implement in hardware, based on the correlation of the signal with itself. In a configuration like the one depicted with APD arrays, for example, some of them could be above and some below threshold, but anyway autocorrelation would deliver large peaks on the large spot, removing the effect of different gains in individual APDs. Such an effect is especially relevant in arrays of SPADs.

The multi-pixel lidar detector can be a 1D or 2D photodiode array, since autocorrelation processing can be applied to both without problems.

This autocorrelation approach solves one of the main issues of detection based on SPAD arrays by filtering false alarms, and on APD arrays, to add security in alarm triggering due to differences in sensor response and thus remove outliers.

The autocorrelation processing aspect of the invention is preferably applicable in the lidar imaging apparatus having a spatial light modulator, in particular a DMD, as described in the foregoing with respect to compressive sensing.

InGaAs is the photosensitive material for the lidar detector at longer wavelengths.

The electronic processing unit is adapted to perform the autocorrelation of the signal in real time during driving. Therefore, it can be preferable to provide a dedicated hardware processing device for performing said autocorrelation processing, like a separate microcontroller, digital signal processor DSP or an ASIC or FPGA device. The functionality of a dedicated hardware device could also be provided as a component of a system-on-chip SoC device.

According to a further aspect of the invention, the receiving section comprises a radiation concentrator arranged between the digital micromirror device and the lidar detector, wherein the radiation concentrator is adapted to concentrate the radiation incident on the lidar detector. Such concentrators essentially function like telescope bowls, and likewise the goal is to gather more faint light onto the detector. The size of the detector "active area" becomes that of the aperture of the concentrator. Given the cost of the detector is related to the wafer area, this brings huge reduction in cost for an InGaAs detector, and maybe even some cost benefit for a Silicon detector.

Summarizing the above, this aspect of the invention brings cost reduction, improves the range of the imaging apparatus and/or reduces the required power, by adding a light concentrator in front of the detector which enables working with smaller detectors, in particular APDs.

In preferred embodiments with DMD, the imaging system is imaging onto the DMD and collecting light onto, for example, an APD array in an imaging and/or a non-imaging mode. As already mentioned, when relevant fields of view are involved, the size of the detector becomes critical. Current embodiments where the photosensitive material of the detector is based on silicon enable 2 mm to 3mm wide APDs, which would be too expensive if implemented in InGaAs for longer wavelengths above 1064 nm.

The use of an optical concentrating device for concentrating the incident radiation directly onto the lidar detector enables a longer range of the imaging apparatus, cost reduction and wider FOV with smaller photodetector. An imaging apparatus having an optical concentrator enabling a better light collection capability is useful at any practical wavelength, but in particular at longer wavelengths towards 1550 nm due to the lack of large-size photodiodes or photodiode arrays.

In a preferred embodiment, the optical concentrator comprises at least one parabolic mirror. Preferably, the optical concengtrator comprises at least one light trap, which can contribute to even better light collection on the lidar detector.

A very preferred application of the invention relates to longer laser wavelengths (as compared to conventionally used wavelengths) where no large photodiodes or photo diode arrays are found in the market. According to the invention, the wavelength of the laser used for generating the light beam and the peak sensitivity of the lidar detector, and preferably also of the further photo detector, is longer than 1100 nm, preferably longer than 1300 nm, more preferably longer than 1400 nm; and specifically in the range between 1100 nm and 2000 nm, preferably between 1300 nm and 1800 nm, more preferably between 1400 nm and 1650 nm, for example 1550 nm. For such wavelengths, suited photosensitive material for the lidar detector and/or the further photo detector are InGaAs. However, the inventive imaging apparatus also works at other suited wavelengths different from 1550 nm.

In the following the invention shall be illustrated on the basis of preferred embodiments with reference to the accompanying drawings, wherein:
- Fig. 1: shows a schematic setup of a lidar imaging apparatus;
- Fig. 2: shows a fused image obtained from fusing images from the lidar detector and the further detector;
- Fig. 3: shows a plan view onto the DMD for illustrating a possible scan pattern of the laser beam;
- Fig. 4: shows a preferred embodiment of an optical concentrator for the lidar detector;
- Figs. 5A-5H: show further preferred embodiments of an optical concentrator for the lidar detector; and
- Fig. 6: shows a plan view onto the lidar detector for illustrating autocorrelation processing.

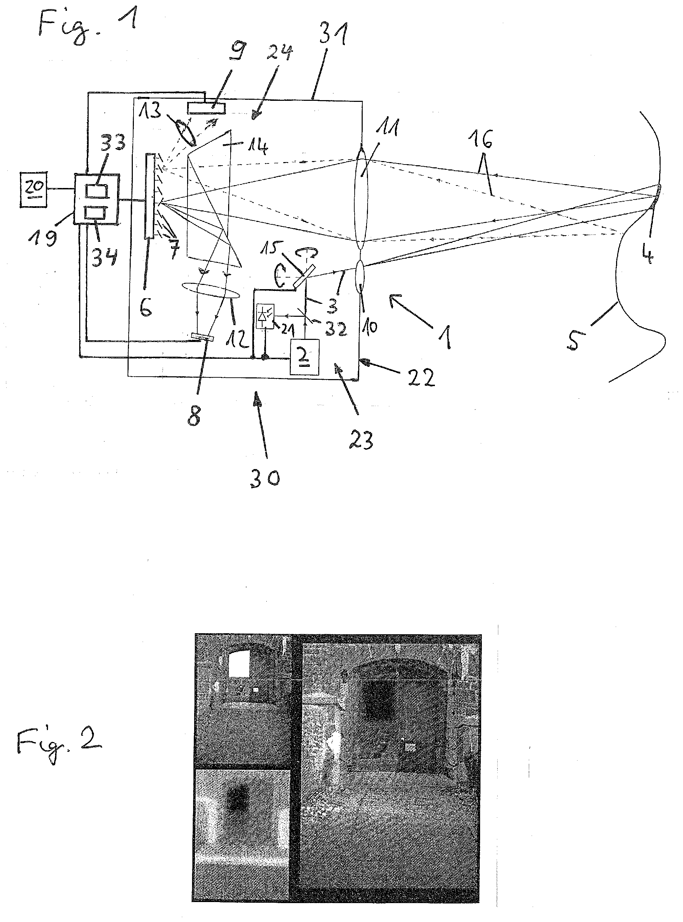

The lidar imaging apparatus 30 is mounted in or to a motor vehicle to capture images of a region in the environment of the motor vehicle, for example a region in front of the motor vehicle. The lidar imaging apparatus 30 comprises an optical unit 22 and a data processing unit 19. The optical unit 22 comprises a housing 31, an emitting section 23 with a a light source 2 and a scanning device 15, and a receiving section 24 with a Digital Micromirror Device (DMD) 6, a lidar detector 8 and a further photo detector 9. In a preferred embodiment shown in Figure 1, the emitting section 23 and the receiving section 24 are arranged in a single optical unit 22 in a common housing 31. In other embodiments, the emitting section 23 and the receiving section 24 are separate units each having its own housing.

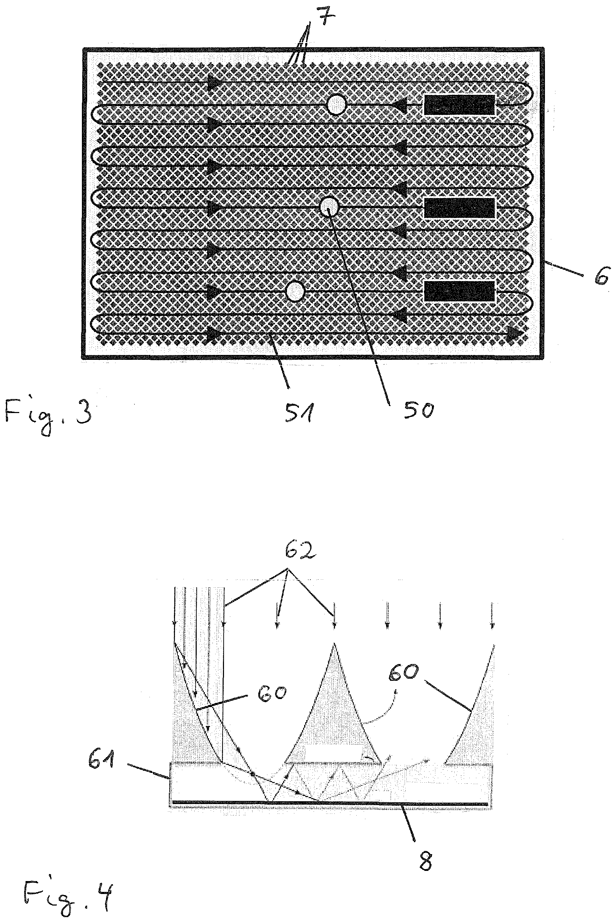

The light source 2, in particular a laser device, generates a pulsed beam 3 of light, in particular pulsed laser radiation. The scanning device 15 is adapted to direct the laser beam 3 through a transparent optical element 10 into the environment of the motor vehicle. The scanning device 15 is adapted to change the direction of the laser beam 3 in two directions perpendicular to the laser beam 3, for example in the horizontal and vertical direction, in order to scan a surface 5 in the vehicle environment in two directions, as controlled by the electronic control unit 19. For example, the scanning device 15 can comprise a mirror rotatable around two perpendicular rotation axes, as shown in Figure 1. A possible scanning pattern generated by the scanning device 15 is shown in Figure 3, which will be described later. The optical element 10 may be a transparent window, or a lens or lens group, in particular for modifying, for example widening, the laser beam 3. The scanning device 15 may preferably be a MEMS device.

When the light beam 3 emitted by the emitting section 23 hits a surface 5 in the vehicle environment, a laser spot 4 is generated on the surface 5. Light reflected from the surface 5 in the region of and around the laser spot 4 enters through the lens objective 11 into the receiving section 24 of the imaging apparatus 30. The lens objective 11 comprises one or more lenses arranged for focusing an image of the scanned surface 5 in the region around the laser spot 4 onto a spatial light modulator, in particular a digital micromirror device DMD 6.

The DMD 6 comprises a matrix of mirrors 7 which are controllable by the electronic processing unit 19 to change between at least two different positions. In a first position of each mirror 7 (5^{th} mirror 7 from top in the example of Figure 1), the light incident from the lens objective 11 onto the DMD 6 is directed towards and onto a lidar detector 8. A double prism 14, or another suited light deflection element, may be provided for changing the direction of the light outgoing from the DMD 6 in the first direction onto the lidar detector 8 to be explained below. Preferably, a further lens objective 12 having one or more optical lenses is provided in the first or lidar path from the DMD 6, for focusing the light outgoing from the DMD 6 in the first direction onto the lidar detector 8.

In a second position of each mirror (all other mirrors 7 than 5^{th} mirror 7 from top in the example of Figure 1), the light incident from the lens objective 11 onto the DMD 6 is directed towards and onto a further detector 9 to be explained below (shown for the 2^{nd} mirror 7 from the top in Figure 1). A suited light deflection element, not shown in Figure 1, may be provided for changing the direction of the light outgoing from the DMD 6 in the second direction onto the further detector 9. Preferably, another lens objective 13 having one or more optical lenses is provided in the second or further path from the DMD 6, for focusing the light outgoing from the DMD 6 in the second direction onto the further detector 9. Preferably, the lens objective 13 and the imaging sensor 9 are part of a camera. The mirrors 7 of the DMD 6 are controlled to be in the first or second position by the electronic control unit 19.

The lidar detector 8 may be any one of an avalanche photo diode APD, an APD array, a single photon avalanche diode SPAD or an SPAD array, a positive-intrinsic-negative PIN diode or a PIN array, a multi pixel photon counter MPPC diode array, or any other suited photosensitive lidar detector.

The emitting section 23 of the optical unit 31 comprises a beam splitter 32 for splitting a small amount of the laser beam 3 to a photosensitive element 21, like a photodiode. The photosensitive element 21 is provided for defining the start time of a laser pulse. The end time of the same laser pulse can be determined by the data processing unit 19 on the basis of a corresponding signal from the lidar detector 8. The time period from the start time until the end time of a laser pulse defines time-of-flight of the laser pulse. The time-of-flight can be converted into a distance by the data processing unit 19 using the speed of light. After all, the distance information of all mirrors 7 of the DMD 6 provides a depth map of the scanned field of view of the optical unit 22.

The further detector 9 preferably is or comprises an imaging sensor, like a CCD sensor, a CMOS based sensor, a focal plane array, a polarimetric sensor and/or a combination thereof and/or any suited photosensitive area sensor or line sensor. The further detector 9 may be suited for taking color images, in particular RGB images, or grayscale images. The peak sensitivity of the further detector 9 is preferably different from the wavelength of the laser beam 3.

The electronic control unit 19 is preferably a digital device which is programmed or programmable and preferably comprises a microprocessor, a microcontroller, a digital signal processor (DSP), a System-On-Chip (SoC) device, and/or dedicated hardware device, for example Field Programmable Gate Array (FPGA), an Application Specific Integrated Circuit (ASIC), a Graphics Processing Unit (GPU) or an FPGA and/or ASIC and/or GPU part in a System-On-Chip (SoC) device. The data processing unit 19 is preferably realized in an on-board electronic control unit (ECU) .

As shown in Figure 3, the light reflected from the scanned surface 5 in the region of the laser spot 4 and focussed onto the DMD 6 by the lens objective 11 causes a corresponding laser spot 50 on the DMD 6. Also shown in Figure 3 is the scanning pattern 51 of the laser beam 3. Here, a line scanning pattern 51 is shown for example, where after scanning a line, the laser beam is changed vertically downwards to start the scan of the next line in the opposite direction than in the previous line. Other scan patterns are possible, for example line scans from bottom to top, column scans, etc. It should be noted that the three laser spots 50 visible in Figure 3 correspond to three different times; at each time, only one laser spot 50 is present on the DMD 6. The three dark rectangles on the right in Figure 3 have no meaning and should be ignored. The further detector 9 may be adapted to image essentially the whole field of view of the receiving section 24 at each time, because the number of mirrors 7 set to the first position for directing the laser spot 50 to the lidar detector 8 is small, and all other mirrors 7 can be set to the second position to direct the incoming light to the further detector 9.

In a preferred application, lidar images from the lidar detector 8 and further images from the further detector 9, comprising complementary image information, are fused to result in a fused image providing more image information than the lidar images alone. This is illustrated by Figure 2, showing an image obtained by the further detector 9 (top left in Fig. 2), a depth image obtained by the lidar detector 8 (bottom left in Fig. 2), and a fused image (right in Fig. 2). The data fusion is preferably carried out in the data processing unit 19. The further image can have a different resolution, in particular a higher resolution, than the lidar depth image. Both grey-scale and depth images can be processed, e.g. by interpolation and/or superposition, and a field of view matching can be performed to match the images and achieve the fused image.

The image fusion described above is preferably carried out under normal environmental conditions, like weather and/or light conditions. In this regard, the data processing unit 19 is preferably adapted to determine whether the environmental conditions are normal, or if one or more extraordinary environmental conditions are fulfilled, like fog, rain, snow and so on, or if the lidar imaging is inoperative or low quality for some reasons. In that case, the further image from the further detector 9 may be used in a manner different from the above described data fusion. For example, a depth image could be calculated from the further image, for example by optical flow calculation, and used instead of the lidar depth image. Alternatively, the quality of the lidar depth map could be improved using the further image information from the further detector 9.

The light source 2 operates at wavelengths longer than 1100 nm, for example 1550 nm, and the lidar detector 8 has a corresponding peak sensitivity above 1100 nm adapted to the wavelength of the laser beam 3.

In one preferred embodiment, the further detector 9 is a low-resolution detector, in particular a single pixel detector, which is particularly useful at wavelengths longer than 1100 nm. In this embodiment, the data processing unit 19 is advantageously adapted to perform compressive sensing on the signal provided by the further detector 9. The skilled person generally knows suitable compressive sensing algorithms. Preferably, the compressive sensing processing is performed in a dedicated hardware device 33, for example an ASIC, FPGA or GPU device, in the data processing unit 19.

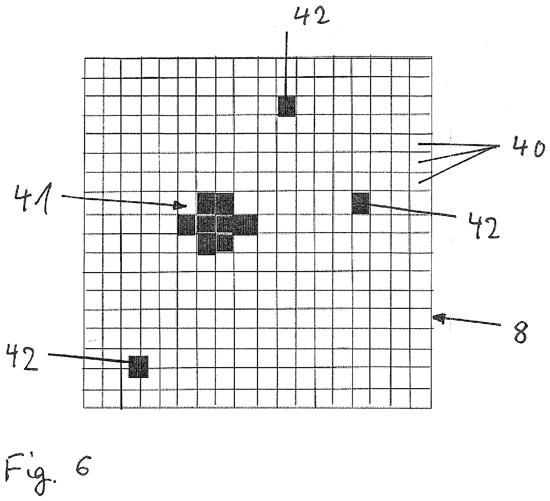

In another preferred embodiment, the lidar detector 8 is a photodiode array, in particular an array of single photon avalanche diodes (SPAD array). In this case, the data processing unit 19 is preferably adapted to perform autocorrelation processing on the signal provided by the signal from the lidar detector 8. This can be explained referring to Figure 6. Here, a true event 41 to be detected usually comprises detections from a group or cluster 41 of several pixels, which can reliably be determined by autocorrelation processing. On the other hand, single pixel detections 42 originating from noise or artefacts are suppressed by autocorrelation processing, and can therefore easily be ruled out. Preferably, the autocorrelation processing is performed in a dedicated hardware device 34, for example an ASIC, FPGA or GPU device, in the data processing unit 19.

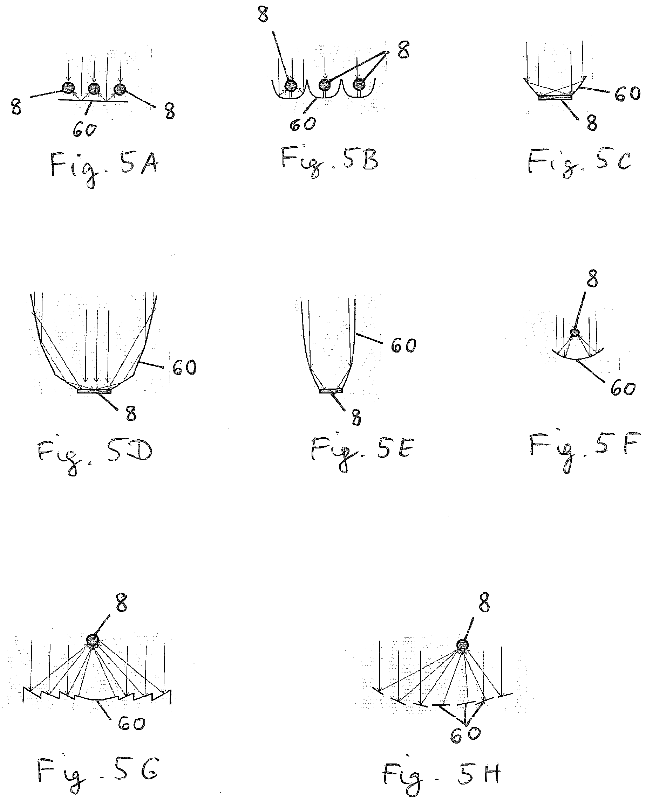

Figures 4 and 5A to 5H show embodiments of an lidar imaging apparatus having an optical concentrator 60 for collecting more incident light 62 onto the lidar detector 8 than would be possible without the optical concentrator 60. The optical concentrator 60 is preferably a reflective device, and may further preferably comprise one or more parabolic mirrors, as shown in Figures 4 and 5A to 5H. The aperture of the optical concentrator 60, collecting more incident light rays 62 than without optical concentrator 60, leads to an enlarged effective area of the lidar detector 8 in comparison to the physical area, and therefore to an enlarged detection sensitivity and a larger signal-to-noise ratio.

The embodiment shown in Figure 4 is particularly preferred because it comprises a light trap or light trapping cage 61 which hinders light rays from escaping the arrangement and thus can contribute to collecting even more light rays, or causing multiple detections per incident light ray 62. The light trapping cage can advantageously be arranged between the one or more parabolic mirrors 60 and the lidar detector 8, as can be seen in Figure 4.

The exemplary embodiments shown in Figures 5A to 5H can be shortly described as follows. Fig. 5A, tubular detector 8 with diffuse back reflector 60; Fig. 5B, tubular detector 8 with specular cusp reflector 60; Fig. 5C, plane detector 8 with plain reflectors giving the concentrator the form of a V-trough; Fig. 5D, plane detector 8 with multisectional planar concentrator 60; Fig. 5E, plane detector 8 with compound parabolic concentrator 60; Fig. 5F, tubular detector 8 with parabolic trough concentrator 60; Fig. 5G, tubular detector 8 with Fresnel concentrator 60; Fig. 5H, array reflectors 60 with a central detector 8. Concentration of light on the detector 8 is achieved by shaping the reflectors (mirrors) around the detector 8.

Since in the present application, the incoming rays 62 do not come parallel from infinite, but converge with significant aperture, optical design of the concentrator 60 may deviate from the parabolic form adapted to parallel incoming light. The optical design may preferably involve tailored reflectors depending on aperture, or free form mirrors. Furthermore, prisms, total internal reflection TIR conditions, and/or light trapping etc. may be applied. Finally a centering job is preferably applied.

Although the optical collector 60 has been described above with respect to the lidar detector 8, a similar optical collector could alternatively or in addition be provided in front of the further photo detector 9.

Further image and data processing is carried out by corresponding software in the data processing unit 19 on the basis of the image information provided by the lidar detector 8 and/or the further detector 9. The image and data processing in the processing unit 19 may for example comprise identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 20 depending on an estimation performed with respect to a tracked object, for example on an estimated collision probability. The safety device 20 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals. All steps from image data acquisition, depth estimation, data processing to possible activation and/or control of the driver assistance device 20 are performed automatically and continuously during driving in real time.

The invention is applicable to autonomous driving, where the ego vehicle is an autonomous vehicle adapted to drive partly or fully autonomously or automatically, and driving actions of the driver are partially and/or completely replaced or executed by the ego vehicle.

## Claims

1. A lidar imaging apparatus (30) for a motor vehicle, comprising an emitting section (23) having a laser (2) adapted to emit a pulsed light beam (3), said emitting section (23) being adapted to change the direction of the light beam (3) in two dimensions perpendicularly to the light beam (3), a receiving section (24) having a lens objective (11), a digital micromirror device (6) comprising a matrix of mirrors (7), a lidar detector (8) and a further photo detector (9), and an electronic processing unit (19), wherein each mirror (7) of the digital micromirror device (6) is controllable by said electronic processing unit (19) to change at least between a first position where light entering the lidar imaging apparatus (30) through said lens objective (11) is directed on said lidar detector (8), and a second position where light entering the lidar imaging apparatus (30) through said lens objective (11) is directed on said further photo detector (9), wherein said electronic processing unit (19) is adapted to determine the time-of-flight of a laser pulse from said emitting section (23) to said lidar detector (8), **characterized in that** said electronic processing unit (19) performs compressive sensing processing on the signal provided by said further photo detector (9) in order to generate a further image with higher resolution than the further photo detector (9) could provide without compressive sensing, wherein the wavelength of the laser (2) used for generating the light beam (3) and the peak sensitivity of the lidar detector (8) is in the range between 1100 nm and 2000 nm, wherein the lidar detector (8) comprises a photosensitive layer made of, or based on, InGaAs, wherein said lidar detector (8) is a multi-pixel lidar detector (8), namely a lidar photodiode array, wherein said electronic processing unit (19) performs autocorrelation processing on the signal provided by said lidar detector (8) in order to filter out false alarms in the lidar photodiode array, wherein a true event to be detected comprises a group or cluster (41) of several pixels in a plan view onto the lidar detector (8) determined by said autocorrelation processing.

2. The lidar imaging apparatus as claimed in claim 1, **characterized in that** said electronic processing unit (19) is adapted to determine a condition where said lidar imaging is not fully operative, and to use images from said further photo detector (9) at different depths to estimate a depth map.

3. The lidar imaging apparatus as claimed in any one of the preceding claims, **characterized in that** at least one additional illumination source, preferably operating at a different wavelength than the laser (2), is provided for illuminating the scene viewed by the imaging apparatus.

4. The lidar imaging apparatus as claimed in any one of the preceding claims, **characterized in that** said further photo detector (9) is a single pixel detector, or an array photodetector with a small number of pixels.

5. The lidar imaging apparatus as claimed in any one of the preceding claims, **characterized in that** said electronic processing unit (19) is adapted to perform range gating with respect to said further photo detector (9), preferably using a variable focus/time gate/pulse length of the illumination.

6. The lidar imaging apparatus as claimed in any one of the preceding claims, **characterized in that** a dedicated hardware processing device (33) is provided for performing said compressive sensing processing.

7. The lidar imaging apparatus as claimed in any one of the preceding claims, **characterized in that** said electronic processing unit (19) is adapted to perform compressive sensing processing also on the signal provided by said lidar detector (8).

8. The lidar imaging apparatus as claimed in any one of the preceding claims, **characterized in that** said electronic processing unit (19) is adapted to fuse image data provided by said lidar detector (8) and said further photo detector (9) into a fused image.

9. The lidar imaging apparatus as claimed in any one of the preceding claims, **characterized in that** said electronic processing unit (19) is adapted to intersperse baseline time-of-flight images in sensing flow to determine the amount of obscurants in the sensing path and, based on that result, to shift emphasis on processing between time-of-flight, gated imaging, and compressed sensing.

10. The lidar imaging apparatus as claimed in any one of the preceding claims, **characterized in that** a dedicated hardware processing device (34) is provided for performing said autocorrelation processing.

11. The lidar imaging apparatus as claimed in any one of the preceding claims, **characterized in that** said multi-pixel lidar detector (8) is a 1D or 2D photodiode array.

12. The lidar imaging apparatus as claimed in any one of the preceding claims, **characterized in that** the wavelength of the further photo detector (9) is longer than 1100 nm.

13. The lidar imaging apparatus as claimed in any one of the preceding claims, **characterized in that** the further photo detector (9) comprise a photosensitive layer made of, or based on, InGaAs.

14. The lidar imaging apparatus as claimed in any one of the preceding claims, **characterized in that** the further detector (9) and/or the lidar detector (8) comprises one or more photodiode(s), or photodiode array, from the group of :
- Photo Diode (PD);
- Avalanche Photo Diode(s) APD;
- Single Photon Avalanche Diode(s) SPAD;
- Positive-Intrinsic-Negative PIN diode(s);
- Multi Pixel Photon Counter MPPC diode(s).

15. The lidar imaging apparatus as claimed in any one of the preceding claims, **characterized in that** the receiving section (24) comprises an optical concentrator (60) arranged between said digital micromirror device (6) and said lidar detector (8) and/or said further photodetector (9), wherein said radiation concentrator (60) is adapted to concentrate the radiation (62) incident on the detector (8, 9).

16. The lidar imaging apparatus as claimed in claim 15, **characterized in that** said radiation concentrator (60) comprises at least one parabolic mirror and/or at least one light trap.

## Patentansprüche

1. Eine Lidar-Bildaufnahmevorrichtung (30) für ein Kraftfahrzeug, umfassend einen Sendeteil (23) mit einem Laser (2), der dazu eingerichtet ist, einen gepulsten Lichtstrahl (3) zu emittieren, wobei der Sendeteil (23) dazu eingerichtet ist, die Richtung des Lichtstrahls (3) in zwei Dimensionen senkrecht zu dem Lichtstrahl (3) zu ändern, einen Empfangsteil (24) mit einem Linsenobjektiv (11), einer digitalen Mikrospiegelvorrichtung (6), die eine Matrix von Spiegeln (7) umfasst, einem Lidar-Detektor (8) und einem weiteren Fotodetektor (9) und einer elektronischen Verarbeitungseinheit (19), wobei jeder Spiegel (7) der digitalen Mikrospiegelvorrichtung (6) durch die elektronische Verarbeitungseinheit (19) steuerbar ist, um zumindest zwischen einer ersten Position, in der Licht, das durch das Linsenobjektiv (11) in die Lidar-Bildaufnahmevorrichtung (30) eintritt, auf den Lidar-Detektor (8) gerichtet wird und einer zweiten Position, in der Licht, das durch das Linsenobjektiv (11) in die Lidar-Bildaufnahmevorrichtung (30) eintritt, auf den weiteren Fotodetektor (9) gerichtet ist, zu wechseln, wobei die elektronische Verarbeitungseinheit (19) dazu eingerichtet ist, die Laufzeit eines Laserpulses von dem Sendeteil (23) zu dem Lidar-Detektor (8) zu bestimmen, **dadurch gekennzeichnet, dass** die elektronische Verarbeitungseinheit (19) eine komprimierte Erfassungsverarbeitung an dem von dem weiteren Fotodetektor (9) gelieferten Signal durchführt, um ein weiteres Bild mit einer höheren Auflösung zu erzeugen, als der weitere Fotodetektor (9) ohne komprimierte Erfassung liefern könnte, wobei die Wellenlänge des Lasers (2), der zur Erzeugung des Lichtstrahls (3) verwendet wird, und die Hauptempfindlichkeit des Lidar-Detektors (8) in dem Bereich zwischen 1100 nm und 2000 nm liegen, wobei der Lidar-Detektor (8) eine lichtempfindliche Schicht bestehend aus oder auf der Basis von InGaAs umfasst, wobei der Lidar-Detektor (8) ein Multi-Pixel-Lidar-Detektor (8) ist, nämlich ein Lidar-Photodioden-Array, wobei die elektronische Verarbeitungseinheit (19) eine Autokorrelationsverarbeitung des von dem Lidar-Detektor (8) gelieferten Signals durchführt, um Fehlalarme in dem Lidar-Photodioden-Array herauszufiltern, wobei ein wahres zu detektierendes Ereignis eine Gruppe oder eine Ansammlung (41) von mehreren Pixeln in einer Draufsicht auf den Lidar-Detektor (8) umfasst, die durch die Autokorrelationsverarbeitung bestimmt wird.

2. Die Lidar-Bildaufnahmevorrichtung nach Anspruch 1, **dadurch gekennzeichnet, dass** die elektronische Verarbeitungseinheit (19) dazu eingerichtet ist, einen Zustand zu bestimmen, in dem die Lidar-Bildaufnahme nicht voll funktionsfähig ist, und Bilder von dem weiteren Fotodetektor (9) in verschiedenen Tiefen zu verwenden, um eine Tiefenkarte zu schätzen.

3. Die Lidar-Bildaufnahmevorrichtung nach einem der vorangehenden Ansprüche, **dadurch gekennzeichnet, dass** mindestens eine zusätzliche Beleuchtungsquelle, die vorzugsweise mit einer anderen Wellenlänge als der Laser (2) arbeitet, zum Beleuchten der von der Bildaufnahmevorrichtung betrachteten Szene vorgesehen ist.

4. Die Lidar-Bildaufnahmevorrichtung nach einem der vorangehenden Ansprüche, **dadurch gekennzeichnet, dass** der weitere Fotodetektor (9) ein Einzelpixeldetektor oder ein Array-Fotodetektor mit einer geringen Anzahl von Pixeln ist.

5. Die Lidar-Bildaufnahmevorrichtung nach einem der vorangehenden Ansprüche, **dadurch gekennzeichnet, dass** die elektronische Verarbeitungseinheit (19) dazu eingerichtet ist, eine Bereichsgattersteuerung in Bezug auf den weiteren Fotodetektor (9) durchzuführen, vorzugsweise unter Verwendung eines variablen Fokus/Zeitausschnitts/einer variablen Impulslänge der Beleuchtung.

6. Die Lidar-Bildaufnahmevorrichtung nach einem der vorangehenden Ansprüche, **dadurch gekennzeichnet, dass** eine dedizierte Hardware-Verarbeitungsvorrichtung (33) zur Durchführung der komprimierte Erfassungsverarbeitung vorgesehen ist.

7. Die Lidar-Bildaufnahmevorrichtung nach einem der vorangehenden Ansprüche, **dadurch gekennzeichnet, dass** die elektronische Verarbeitungseinheit (19) dazu eingerichtet ist, die komprimierte Erfassungsverarbeitung auch an dem von dem Lidar-Detektor (8) gelieferten Signal durchzuführen.

8. Die Lidar-Bildaufnahmevorrichtung nach einem der vorangehenden Ansprüche, **dadurch gekennzeichnet, dass** die elektronische Verarbeitungseinheit (19) dazu eingerichtet ist, von dem Lidar-Detektor (8) und dem weiteren Fotodetektor (9) gelieferte Bilddaten zu einem fusionierten Bild zu fusionieren.

9. Die Lidar-Bildaufnahmevorrichtung nach einem der vorangehenden Ansprüche, **dadurch gekennzeichnet, dass** die elektronische Verarbeitungseinheit (19) dazu eingerichtet ist, Basislinienlaufzeitbilder in den Erfassungsfluss einzuschieben, um die Menge an Verdunkelungsmitteln im Abtastpfad zu bestimmen und, basierend auf diesem Ergebnis, den Schwerpunkt der Verarbeitung zwischen Laufzeit, Gatter-Bildgebung und komprimierter Erfassung zu verschieben.

10. Die Lidar-Bildaufnahmevorrichtung nach einem der vorangehenden Ansprüche, **dadurch gekennzeichnet, dass** eine dedizierte Hardware-Verarbeitungsvorrichtung (34) zur Durchführung der Autokorrelationsverarbeitung vorgesehen ist.

11. Die Lidar-Bildaufnahmevorrichtung nach einem der vorangehenden Ansprüche, **dadurch gekennzeichnet, dass** der Multi-pixel-Lidar-Detektor (8) ein 1D- oder 2D-Fotodioden-Array ist.

12. Die Lidar-Bildaufnahmevorrichtung nach einem der vorangehenden Ansprüche, **dadurch gekennzeichnet, dass** die Wellenlänge des weiteren Fotodetektors (9) länger als 1100 nm ist.

13. Die Lidar-Bildaufnahmevorrichtung nach einem der vorangehenden Ansprüche, **dadurch gekennzeichnet, dass** der weitere Fotodetektor (9) eine lichtempfindliche Schicht umfasst, die aus InGaAs besteht oder auf InGaAs basiert.

14. Die Lidar-Bildaufnahmevorrichtung nach einem der vorangehenden Ansprüche, **dadurch gekennzeichnet, dass** der weitere Detektor (9) und/oder der Lidar-Detektor (8) eine oder mehrere Photodiode(n) oder Photodioden-Array(s) umfasst, aus der Gruppe von:
- Fotodiode (PD);
- Avalanche-Fotodiode(n) APD;
- Einzelphotonen-Avalanche-Diode(n) SPAD;
- Positiv-Intrinsisch-Negativ-PIN-Diode(n);
- Multi-Pixel-Photonen-Zähler MPPC-Diode(n).

15. Die Lidar-Bildaufnahmevorrichtung nach einem der vorangehenden Ansprüche, **dadurch gekennzeichnet, dass** der Empfangsteil (24) einen optischen Konzentrator (60) umfasst, der zwischen der digitalen Mikrospiegelvorrichtung (6) und dem Lidar-Detektor (8) und/oder dem weiteren Fotodetektor (9) angeordnet ist, wobei der Strahlungskonzentrator (60) dazu eingerichtet ist, die auf den Detektor (8, 9) einfallende Strahlung (62) zu konzentrieren.

16. Die Lidar-Bildaufnahmevorrichtung nach Anspruch 15,
**dadurch gekennzeichnet, dass** der Strahlungskonzentrator (60) mindestens einen Parabolspiegel und/oder mindestens eine Lichtfalle umfasst.

## Revendications

1. Un appareil d'imagerie lidar (30) pour véhicule à moteur, comprenant une partie émettrice (23) dotée d'un laser (2) conçu pour émettre un faisceau lumineux (3) pulsé, ladite partie émettrice (23) étant conçue pour modifier la direction du faisceau lumineux (3) dans deux dimensions perpendiculairement au faisceau lumineux (3), une partie réceptrice (24) dotée d'un objectif à lentille (11), un dispositif numérique à micromiroirs (6) comprenant une matrice de miroirs (7), un détecteur lidar (8) et un autre photodétecteur (9), et une unité de traitement électronique (19), chaque miroir (7) du dispositif numérique à micromiroirs (6) pouvant être commandé par ladite unité de traitement électronique (19) pour changer au moins entre une première position dans laquelle de la lumière qui pénètre dans l'appareil d'imagerie lidar (30) par ledit objectif à lentille (11) est dirigée sur ledit détecteur lidar (8) et une seconde position dans laquelle de la lumière qui pénètre dans l'appareil d'imagerie lidar (30) par ledit objectif à lentille (11) est dirigée sur ledit autre photodétecteur (9), ladite unité de traitement électronique (19) étant conçue pour déterminer le temps de vol d'une impulsion laser de ladite partie émettrice (23) audit détecteur lidar (8), **caractérisé en ce que** ladite unité de traitement électronique (19) effectue un traitement d'acquisition comprimée sur le signal fourni par ledit autre photodétecteur (9) afin de générer une autre image avec une résolution plus élevée par rapport à ce que l'autre photodétecteur (9) pourrait fournir sans acquisition comprimée, la longueur d'onde du laser (2) utilisé pour générer le faisceau lumineux (3) et la sensibilité maximale du détecteur lidar (8) étant situées dans la plage allant de 1100 nm à 2000 nm, le détecteur lidar (8) comprenant une couche photosensible constituée de, ou à base de, InGaAs, ledit détecteur lidar (8) étant un détecteur lidar (8) multi-pixel, à savoir un réseau de photodiodes lidar, ladite unité de traitement électronique (19) effectuant un traitement d'autocorrélation sur le signal fourni par ledit détecteur lidar (8) afin d'éliminer par filtrage les fausses alarmes dans le réseau de photodiodes lidar, un événement réel à détecter comprenant un groupe ou un amas (41) de plusieurs pixels dans une vue de dessus du détecteur lidar (8) déterminé par ledit traitement d'autocorrélation.

2. L'appareil d'imagerie lidar selon la revendication 1, **caractérisé en ce que** ladite unité de traitement électronique (19) est conçue pour déterminer une condition dans laquelle ladite imagerie lidar n'est pas entièrement opérationnelle et pour utiliser des images provenant dudit autre photodétecteur (9) à différentes profondeurs pour estimer une carte de profondeur.

3. L'appareil d'imagerie lidar selon l'une quelconque des revendications précédentes, **caractérisé en ce qu'**au moins une source d'éclairage supplémentaire, fonctionnant de préférence à une longueur d'onde différente du laser (2), est prévue pour éclairer la scène vue par l'appareil d'imagerie.

4. L'appareil d'imagerie lidar selon l'une quelconque des revendications précédentes, **caractérisé en ce que** ledit autre photodétecteur (9) est un détecteur à pixel unique ou un photodétecteur à réseau avec un faible nombre de pixels.

5. L'appareil d'imagerie lidar selon l'une quelconque des revendications précédentes, **caractérisé en ce que** ladite unité de traitement électronique (19) est conçue pour réaliser range gating par rapport audit autre photodétecteur (9), de préférence au moyen d'un foyer / d'une tranche temporelle / d'une longueur d'impulsion variables de l'éclairage.

6. L'appareil d'imagerie lidar selon l'une quelconque des revendications précédentes, **caractérisé en ce qu'**un dispositif matériel de traitement (33) dédié est prévu pour effectuer ledit traitement d'acquisition comprimée.

7. L'appareil d'imagerie lidar selon l'une quelconque des revendications précédentes, **caractérisé en ce que** ladite unité de traitement électronique (19) est conçue pour effectuer un traitement d'acquisition comprimée également sur le signal fourni par ledit détecteur lidar (8).

8. L'appareil d'imagerie lidar selon l'une quelconque des revendications précédentes, **caractérisé en ce que** ladite unité de traitement électronique (19) est conçue pour fusionner des données d'image fournies par ledit détecteur lidar (8) et ledit autre photodétecteur (9) en une image fusionnée.

9. L'appareil d'imagerie lidar selon l'une quelconque des revendications précédentes, **caractérisé en ce que** ladite unité de traitement électronique (19) est conçue pour parsemer des images en temps de vol de ligne de base dans le flux de détection pour déterminer la quantité d'obscurcissants dans le trajet de détection et, en fonction de ce résultat, pour déplacer l'accent mis pour le traitement entre la détection par temps-de-vol, gated imaging et l'acquisition comprimée.

10. L'appareil d'imagerie lidar selon l'une quelconque des revendications précédentes, **caractérisé en ce qu'**un dispositif matériel de traitement (34) dédié est prévu pour effectuer ledit traitement d'autocorrélation.

11. L'appareil d'imagerie lidar selon l'une quelconque des revendications précédentes, **caractérisé en ce que** ledit détecteur lidar multi-pixel (8) est un réseau de photodiodes en 1D ou en 2D.

12. L'appareil d'imagerie lidar selon l'une quelconque des revendications précédentes, **caractérisé en ce que** la longueur d'onde de l'autre photodétecteur (9) est supérieure à 1100 nm.

13. L'appareil d'imagerie lidar selon l'une quelconque des revendications précédentes, **caractérisé en ce que** l'autre photodétecteur (9) comprend une couche photosensible constituée de, ou à base de, InGaAs.

14. L'appareil d'imagerie lidar selon l'une quelconque des revendications précédentes, **caractérisé en ce que** l'autre détecteur (9) et/ou le détecteur lidar (8) comprend une ou plusieurs photodiode(s), ou un réseau de photodiodes, parmi le groupe constitué de :
- photodiode (PD) ;
- photodiode(s) à avalanche APD ;
- diode(s) à avalanche monophotonique(s) SPAD ;
- diode(s) PIN (positive-intrinsic-negative) ;
- diode(s) à compteur de photons multi-pixels MPPC.

15. L'appareil d'imagerie lidar selon l'une quelconque des revendications précédentes, **caractérisé en ce que** la partie réceptrice (24) comprend un concentrateur de lumière (60) agencé entre ledit dispositif numérique à micromiroirs (6) et ledit détecteur lidar (8) et/ou ledit autre photodétecteur (9), ledit concentrateur de rayonnement (60) étant conçu pour concentrer le rayonnement (62) incident sur le détecteur (8, 9).

16. L'appareil d'imagerie lidar selon la revendication 15, **caractérisé en ce que** ledit concentrateur de rayonnement (60) comprend au moins un miroir parabolique et/ou au moins un piège à lumière.
